# NEUE EUROPÄISCHE PATENTSCHRIFT

(11) **EP 0 719 983 B2**
(45) Veröffentlichungstag und Bekanntmachung des Hinweises auf die Entscheidung über den Einspruch: **28.08.2002**
(45) Hinweis auf die Patenterteilung: 27.10.1999
(21) Anmeldenummer: 95810781.5
(22) Anmeldetag: 11.12.1995
(51) Int. Cl.: F23D 14/62

(54) **Verfahren und Vorrichtung zum Zuleiten eines gasförmigen Brennstoffs in einen Vormischbrenner**
Method and device for feeding gaseous fuel to a premix burner
Procédé et dispositif d'alimentation en combustible gazeux d'un brûleur à prémélange

(30) Priorität: 27.12.1994 DE 4446842
(43) Veröffentlichungstag der Anmeldung: 03.07.1996
(73) Patentinhaber: Alstom, 75116 Paris (FR)
(72) Erfinder: McMillan, Robin, CH-5415 Nussbaumen (CH)
(74) Vertreter: Liebe, Rainer

(56) Entgegenhaltungen:
- EP-A- 0 592 717
- EP-A- 0 719 983
- DE-A- 2 428 622
- DE-A- 2 500 192
- DE-A- 3 512 948
- DE-A- 4 330 613
- DE-C- 3 222 347
- FR-A- 2 569 825
- FR-A- 2 619 891
- GB-A- 2 217 829
- JP-A- 63 105 304
- US-A- 4 674 973
- US-A- 4 982 570
- US-A- 5 054 280
- US-A- 5 311 742
- US-A- 5 319 936
- US-A- 5 361 586

## Beschreibung

### Technisches Gebiet

Die Erfindung betrifft ein Verfahren zum Zuleiten eines gasförmigen Brennstoffs in einen Vormischbrenner nach Patentanspruch 1 sowie einen Vormischbrenner zu dessen Durchführung nach Patentanspruch 8.

### Stand der Technik

Es ist allgemein bekannt, bei Vormischbrennern den gasförmigen Brennstoff und/oder die Verbrennungsluft in zwei oder mehreren Stufen miteinander zu vermischen. Dabei wird z.B. ein Teil der zur vollständigen Verbrennung des Brennstoffs notwendigen Luft innerhalb einer Mischzone mit dem Brennstoff vermischt und einer anschliessenden Verbrennungszone zugeleitet (s. z.B. die Schrift EP-A-0 187 441).

Möglich ist aber auch die Vermischung erst eines Teils des Brennstoffs mit einem Teil der Verbrennungsluft. Die Zündung findet normalerweise unmittelbar nach dem Austritt des Gemisches aus der Vormischzone statt, d.h., die Zusammensetzung des Gemisches Brennstoff/Primärluft wird so gewählt, dass es innerhalb der Zündgrenze liegt. Die restliche Luft und eventuell der restliche Brennstoff wird direkt der Flamme zugeführt.

Dabei ist eine gute Durchmischung der Gasströme für die Vermeidung von NOx-Emissionen wichtig. Lokale Fluktuationen der Brennstoff/Luft-Konzentration führen zwangsweise zu höherer NOx-Produktion.

Bei den bekannten Verfahren ist eine gute Durchmischung von Brennstoff und Luft innerhalb der Mischzone nicht immer gewährleistet, z.B. weil aus baulichen Gründen die Länge der Mischzone oft begrenzt bleiben muss. Als Abhilfe verwendet man u.a. Strömungsschikanen in der Mischzone, die eine Durchmischung der Strömungsmedien fördern sollen. Der Einbau solcher Schikanen bedeutet jedoch einen Mehraufwand bei der Konstruktion und führt ausserdem zu unerwünschten Druckverlusten.

Ausserdem besteht immer die Gefahr des Zurückschlagens der Flamme innerhalb der Zuleitung des Gemisches zur Verbrennungszone und auch in der Vormischzone. Als herkömmliche Abhilfen zu diesem Problem dienen sogenannte, "Flammenhalter". Die Verwendung solcher mechanischer Flammenhalter ist wieder mit zusätzlichem baulichem Aufwand verbunden, wobei ein Restrisiko immer vorhanden bleibt. Die mechanischen Flammenhalter sind ausserdem extrem hohen thermischen Belastungen ausgesetzt, was oft zu deren Verschleiss und manchmal zu ihrem Abriss führt. Diese Teile könnten dann andere, weiter stromabwärts befindliche Teile, wie z.B. Turbinenschaufeln, gefährden.

Als flammenhaltende Brenner, welche ohne mechanischen Flammenhalter auskommen, können die sogenannten Vormischbrenner der Doppelkegelbauart bezeichnet werden. Derartige Doppelkegelbrenner sind beispielsweise aus der EP-B1-0 321 809 bekannt. Der Brennstoff, dort Gas, wird in den Eintrittsspalten in die vom Verdichter heranströmende Verbrennungsluft über eine Reihe von Injektordüsen eingespritzt. Diese sind in der Regel über den ganzen Spalt gleichmässig verteilt.

Um eine verlässliche Zündung des Gemischs in der nachgeschalteten Brennkammer und einen genügenden Ausbrand zu erzielen, ist eine innige Mischung des Brennstoffs mit der Luft erforderlich. Eine gute Durchmischung trägt auch dazu bei, sogenannte "hot spots" in der Brennkammer zu vermeiden, die unter anderem zur Bildung des unerwünschten NO_{X} führen.

Es wäre prinzipiell auch möglich, einen Teil der zur Verbrennung erforderlichen Luft stromaufwärts in die Brennstoffleitung einzuspeisen, um eine Art Vorvermischung entlang der Brennstoffleitung zu erreichen. Bei vielen Anwendungen der Vormischbrenner, wie z.B. innerhalb der Brennkammern von Gasturbinen, ist jedoch der Druck in der Luftleitung bedeutend niedriger als der Druck in der Brennstoffleitung. Bei einer solchen Einspeisung müsste folglich die Verbrennungsluft abermals hoch verdichtet werden, was einen erheblichen maschinellen Mehraufwand bedeuten würde. Dies hätte wiederum zur Folge, dass praktisch - trotz des grossen Aufwands - nur ein kleiner Teil der Luft dem Brennstoff auf diese Art beigemischt werden könnte, so dass eine befriedigende Lösung des Promblems immer noch nicht gewährleistet sein würde.

### Darstellung der Erfindung

Zur Überwindung dieser Probleme wird daher ein Verfahren zum Zuleiten eines Brennstoffs in einen Vormischbrenner gemäss dem Patentanspruch 1 vorgeschlagen. Es wird auch eine Vorrichtung zum Ausführen des erfindungsgemässen Verfahrens nach Patentanspruch 8 vorgeschlagen.

In den Unteransprüchen werden vorteilhafte Ausführungen der erfindungsgemässen Verfahren und Vorrichtung dargestellt.

Durch die Massnahme, die Konzentration des Brennstoffes in der Vorvermischung unter den jeweiligen Betriebsbedingungen des Brenners so zu wählen, dass die Vorvermischung ausserhalb der Zündgrenze liegt und die Vorvermischung einer Endmischzone zuzuführen, darin mit dem ebenfalls zugeleiteten restlichen Brennstoff und/oder mit sauerstoffhaltigen Sekundärgas zu vermischen und das resultierende Endgemisch einer nachfolgenden Verbrennungszone zuzuführen, wird eine wesentlich verbesserte Durchmischung erzielt. Die Zusammensetzung der Vormischung ergibt die erforderliche Sicherheit gegen das Zurückschlagen der Flamme.

Die neue Vorrichtung nach Anspruch 8 weist den Vorteil der Einfachheit auf. Im Gegensatz zur eingangs erwähnten Vorrichtung nach EP-A-0 187 441 bedarf es bei der neuen Vorrichtung nicht mehrerer Gehäuse und Leitungen. Grundsätzlich kann die Vorrichtung sowohl für den Betrieb, mit xx Brennstoff als auch mit yy Brennstoff aus nur einem Gehäuse zu bestehen.

### Kurze Beschreibung der Zeichnung

In der Zeichnung sind mehrere Ausführungsbeispiele der Erfindung schematisch und vereinfacht dargestellt.

Es zeigen:
- Fig. 1: ein Schema des allgemeinen Prinzips;
- Fig. 2: eine schematisierte Vorrichtung;
- Fig. 3: einen Querschnitt durch einen Vormischbrenner der Doppelkegel-Bauart im Bereich seines Austritts;
- Fig. 4: einen Querschnitt durch denselben Vormischbrenner im Bereich der Kegelspitze.

Es sind nur die für das Verständnis der Erfindung wesentlichen Elemente gezeigt. Nicht dargestellt sind beispielsweise die vollständige Brennkammer und deren Zuordnung zu einer Anlage, die Brennstoffbereitstellung, die Regeleinrichtungen und dergleichen, Die Strömungsrichtung der Arbeitsmittel ist mit Pfeilen bezeichnet. Funktionsgleiche Elemente sind in den verschiedenen Figuren mit denselben Bezugszeichen versehen.

### Weg zur Ausführung der Erfindung

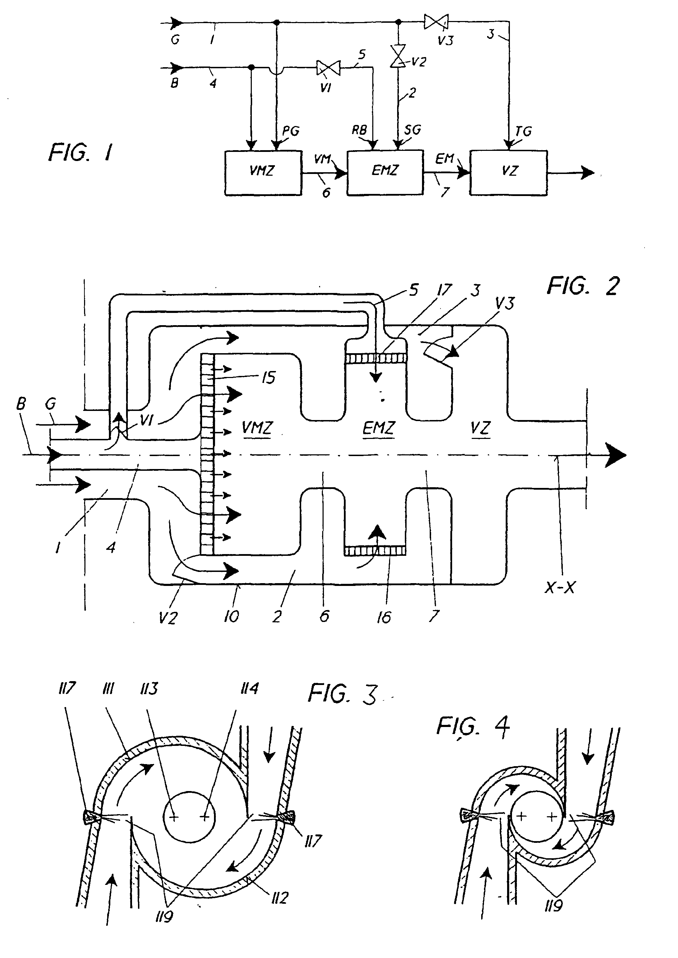

Das Verfahrensprinzip gemäss Fig. 1 wird in einem Vormischbrenner durchgeführt, der im wesentlichen eine Vormischzone VMZ, eine Endmischzone EMZ und eine Verbrennungszone VZ aufweist. Zumindest ein erster Teil eines gasförmigen Brennstoffes B wird über eine Zufuhrleitung 4 dem Vormischbrenner zugeführt. Über eine Hauptleitung 10 geschieht die Zufuhr von sauerstoffhaltigem Gas G, im Beispielsfall Luft, zur Vormischzone VMZ in Form von Primärgas PG. In der Vormischzone VMZ wird eine Vorvermischung VM gebildet. Die Konzentration des Brennstoffes in der Vorvermischung VM wird unter den jeweiligen Betriebsbedingungen des Brenners so gewählt, dass die Vorvermischung ausserhalb der Zündgrenze liegt. Je nach verwendetem Brennstoff kann die Vorvermischung sowohl zu fett als auch zu mager sein. Wird ein Brennstoff mit niedrigem Heizwert verwendet, so liegt die Konzentration des Brennstoffes in der Vorvermischung oberhalb der Zündbarkeitsgrenze. Der Massenanteil des Brennstoffes in der Vorvermischung liegt zwischen etwa 50 und 100 %. Wird hingegen ein Brennstoff mit hohem Heizwert verwendet, so liegt die Konzentration des Brennstoffes in der Vorvermischung unterhalb der Zündbarkeitsgrenze. Der Massenanteil des Brennstoffes in der Vorvermischung liegt in diesem Fall zwischen etwa 0 und 2.2 %. Es versteht sich, dass diese Zahlenangaben nur Richtwerte sind; die genauen Werte hängen ab vom Gastyp, von der Brennlufttemperatur und -druck am Brennereintritt, von Gastemperatur und der Luftgeschwindigkeit im Brenner.

Danach wird die Vorvermischung VM einer Endmischzone EMZ zugeführt, und wird darin mit dem ebenfalls zugeleiteten restlichen Brennstoff RB und/ mit sauerstoffhaltigem Sekundärgas SG vermischt.
Das resultierende Endgemisch EM wird einer nachfolgenden Verbrennungszone VZ zugeführt. Sofern erforderlich, kann der Verbrennungszone VZ noch ein sauerstoffhaltiges Tertiärgas TG zugeführt werden.

Es versteht sich, dass auf diese Weise mehrere Vormischzonen in Reihen- oder Parallelschaltung vorhanden sein können.

In Fig. 2 ist eine schematische Vorrichtung zum Ausführen des Verfahrens dargestellt. Die Hauptleitung 10 für die Zufuhr von Luft in die Mischzonen VMZ und EMZ und in die Verbrennungszone VZ des Vormischbrenners ist als Gehäuse ausgebildet mit einer Längsachse X-X. Erste Zufuhrmittel zum Zuführen von Brennstoff in die Vormischzone VMZ sind mit 4 bezeichnet. Dabei handelt es sich um die Brennstoffzuführung, die in eine senkrecht zur Längsachse angeordnete Düsenplatte 15 mündet. Die Verbrennungsluft gelangt über die Leitung 1 in das Gehäuse oberhalb der Düsenplatte 15.

Zweite, innerhalb des Gehäuses 10 angeordnete Zufuhrmittel 6 dienen dem Weiterleiten der Vorvermischung VM aus der Vormischzone VMZ in eine Endmischzone EMZ. Dritte, zumindest teilweise innerhalb des Gehäuses 10 angeordnete Zufuhrmittel 5, 17 respektiv 2, 16 dienen zum Zuführen von Restbrennstoff RB und/oder Luft SG in die Endmischzone EMZ. Hierzu zweigt die Brennstoffleitung 5 von der Leitung 4 ab. Sie kann mittels eines Absperrorgans V1 verschlossen werden und führt den Brennstoff in die Austrittsdüsen 17. die hier quer zur Strömungsrichtung des Gemisches in die Endmischzone münden. Wird der Endmischzone EMZ ebenfalls Luft zugeleitet, so gelangt diese über eine von der Luftleitung 1 abzweigende Leitung 2 über Austrittsdüsen 16 in die Endmischzone. Auch diese Leitung 2 kann mittels eines Absperrorgans V2 verschlossen werden.

Aus der Endmischzone EMZ gelangt dasfertig aufbereitete Gemisch über eine Überführung 7 in die nachgeschaltete Verbrennungszone VZ. Ein zusätzlicher, mittels Absperrorgan V3 absperrbarer Kanal 3 ist vorgesehen zum Zuführen eines dritten Stroms von Luft TG in die Verbrennungszone VZ.

Folgende Prozesse können mit dieser Vorrichtung realisiert Werden:

Bei nahe zu geschlossenem Absperrorgan V1 und offenem Absperrorgan V2 wird nahe zu der gesamte Brennstoff und ein Teil der Luft der Vormischzone VMZ zugeführt. Diese Fahrweise wird gewählt bei einem Brennstoff niedrigen Heizwertes, wobei der Massenanteil des Brennstoffes in der Vorvermischung zwischen etwa 50 und 100% liegt.

Bei offenem Absperrorgan V1 und nahe zu geschlossenem Absperrorgan V2 wird nahe zu die gesamte Luft und nur ein Teil der Brennstoffes der Vormischzone VMZ zugeführt. Der restliche Brennstoff wird der Endmischzone EMZ zugeführt. Diese Fahrweise wird gewählt bei einem Brennstoff hohen Heizwertes, wobei der Massenanteil des Brennstoffes in der Vorvermischung zwischen etwa 0 und 2.2 % liegt.

Alle Fahrweisen können ergänzt werden durch Zufuhr von Tertiärluft TG in die Verbrennungzone VZ durch entsprechendes Öffnen des Absperrorgans V3.

Beim schematisch in Fig. 3 und 4 dargestellten Vormischbrenner 110 handelt es sich um einen sogenannten Doppelkegelbrenner, wie er beispielsweise aus der EP-B1-0 321 809 bekannt ist.

Die magere Vorvermischung strömt über die tangentialen Schlitze des Brenners in das Brennerinnere. Die im Bereich der tangentialen Schlitze in den Wandungen der beiden Teilkörper in Längsrichtung verteilten Einströmöffnungen (Fig 3 und 4) dienen nunmehr der Eindusung des Restbrennstoffes RB, welcher über die zentrale, aus dem Dom herausragende Brennstofflanze 5 herangeführt wird. Die Gemischanreicherung der mageren Vorvermischung mit dem Restbrennstoff RB beginnt auch hier bereits in der Zone der Eintrittsschlitze.

## Patentansprüche

1. Verfahren zum Zuleiten eines gasförmigen Brennstoffs (B) in einen Vormischbrenner, der eine Hauptleitung (10) für die Zufuhr von sauerstoffhaltigem Gas (G) in mindestens eine Mischzone (VMZ, EMZ) und abhängig vom Brennstoffheizwert auch in eine Verbrennungszone (VZ) aufweist, wobei zumindest ein erster Teil des Brennstoffes der Hauptleitung (10) zugeführt wird, worin es mit einem Teil des sauerstoffhaltigen Gases (G), dem Primärgas (PG), innerhalb zumindest einer Vormischzone (VMZ) vermischt wird und eine Vorvermischung (VM) bildet, wobei
- die Konzentration des Brennstoffes in der Vorvermischung (VM), unter den jeweiligen Betriebsbedingungen des Brenners, so gewählt wird, dass die Vorvermischung ausserhalb der Zündgrenze liegt und
- die Vorvermischung (VM) einer Endmischzone (EMZ) zugeführt wird, darin mit dem ebenfalls zugeleiteten restlichen Brennstoff (RB) und mit sauerstoffhaltigemSekundärgas (SG) vermischt wird
- und das resultierende Endgemisch (EM) einer nachfolgenden Verbrennungszone (VZ) zugeführt wird.

2. Verfahren nach Anspruch 1, wobei der Verbrennungszone (VZ) ein sauerstoffhaltiges Tertiärgas (TG) zugeführt wird

3. Verfahren nach Anspruch 1 oder 2, wobei mehrere Vormischzonen in Reihen- oder Parallelschaltung vorhanden sind.

4. Verfahren nach Anspruch 1, 2 oder 3, wobei ein Brennstoff mit niedrigem Heizwert verwendet wird und die Konzentration des Brennstoffes in der Vorvermischung oberhalb der Zündbarkeitsgrenze liegt.

5. Verfahren nach Anspruch 1, 2 oder 3, wobei ein Brennstoff mit hohem Heizwert verwendet wird und die Konzentration des Brennstoffes in der Vorvermischung unterhalb der Zündbarkeitsgrenze liegt.

6. Verfahren nach Anspruch 4, wobei der Massenanteil des Brennstoffes in der Vorvermischung zwischen etwa 50 und 100 % liegt.

7. Verfahren nach Anspruch 5, wobei der Massenanteil des Brennstoffes in der Vorvermischung zwischen etwa 0 und 2.2 % liegt.

8. Vormischbrenner zum Ausführen des Verfahrens nach einem der vorangehenden Ansprüche, mit einer Hauptleitung (10) die für die Zufuhr von sauerstoffhaltigem Gas in die mindestens eine Mischzone (VMZ, EMZ)und abhängig vom Brennstoffheizwert auch in die Verbrennungszone (VZ) als Gehäuse ausgebildet ist, das zumindest eine Vormischzone (VMZ) zum Vermischen von Brennstoff und sauerstoffhaltigem Gas aufweist, sowie mit
- einer ersten Brennstoffleitung (4) zum Zuführen von Brennstoff in die Vormischzone (VMZ);
- einer zweiten, innerhalb des Gehäuses (10) angeordneten Leitung (6) zum Weiterleiten der Vorvermischung aus der mindestens einen Vormischzone (VMZ) in eine Endmischzone (EMZ);
- einem dritten, zumindest teilweise innerhalb des Gehäuses (10) angeordneten Zufuhrmittel (5, 17; 2, 16) zum Zuführen von Restbrennstoff (RB) und/oder sauerstoffhaltigem Gas, sogenannter Sekundärluft (SG) in die Endmischzone (EZ);
- einer der Endmischzone nachgeschalteten Verbrennungszone (VZ) mit einer Überführung (7) zum Hinüberleiten des fertig aufbereiteten Gemisches aus der Endmischzone (EMZ)in die Verbrennungszone (VZ), sowie
- einem zusätzlichen Kanal (3) zum Zuführen eines dritten Stroms von sauerstoffhaltigemGas in die Verbrennungszone (VZ), und
wobei das Gehäuse (10) eine Längsachse (X-X) aufweist und die erste Brennstoffleitung (4) mit einer Düsenplatte (15) versehen ist, die im wesentlichen senkrecht zu der Längsachse angeordnet ist.

9. Vormischbrenner nach Anspruch 8, wobei die dritten Zufuhrmittel eine Mehrzahl von Austrittsdüsen (16; 17) aufweisen.

10. Vormischbrenner nach Anspruch 8, wobei als Endmischzone ein Brenner nach dem Doppelkegelprinzip verwendet wird mit im wesentlichen zwei hohlen, kegelförmigen, in Strömungsrichtung ineinandergeschachtelten Teilkörpern (111, 112), deren jeweilige Mittelachsen (113, 114) gegeneinander versetzt sind, wobei die benachbarten Wandungen der beiden Teilkörper in deren Längserstreckung tangentiale Spalte (119) für die Vorvermischung bilden, und wobei im Bereich dertangentialen Spalte in den Wandungen der beiden Teilkörper in Längsrichtung verteilte Einströmöffnungen (117) für den Restbrennstoff (RB) und für die Sekundärluft (SG) vorgesehen sind.

## Claims

1. Method of supplying a gaseous fuel (B) to a premixing burner which has a main line (10) for the feed of oxygenous gas (G) into at least one mixing zone (VMZ, EMZ) and, depending on the calorific value of the fuel, also into a combustion zone (VZ), at least a first portion of the fuel being fed to the main line (10), in which it is mixed with a portion of the oxygenous gas (G), the primary gas (PG), inside at least one premixing zone (VMZ) and forms a premixture (VM),
- the concentration of the fuel in the premixture (VM), under the respective operating conditions of the burner, being selected in such a way that the premixture lies outside the ignition limit, and
- the premixture (VM) being fed to a final mixing zone (EMZ) and being mixed therein with the residual fuel (RB) likewise supplied and with oxygenous secondary gas (SG)
- and the resulting final mixture (EM) being fed to a following combustion zone (VZ).

2. Method according to Claim 1, an oxygenous tertiary gas (TG) being fed to the combustion zone (VZ).

3. Method according to Claim 1 or 2, there being a plurality of premixing zones in series or parallel connection.

4. Method according to Claim 1, 2 or 3, a fuel of low calorific value being used and the concentration of the fuel in the premixture being above the ignitability limit.

5. Method according to Claim 1, 2 or 3, a fuel of high calorific value being used and the concentration of the fuel in the premixture being below the ignitability limit.

6. Method according to Claim 4, the mass proportion of the fuel in the premixture being between about 50 and 100 %.

7. Method according to Claim 5, the mass proportion of the fuel in the premixture being between about 0 and 2.2 %.

8. Premixing burner for carrying out the method according to one of the preceding claims, having a main line (10) which, for the feed of oxygenous gas into the at least one mixing zone (VMZ, EMZ) and, depending on the calorific heating value of the fuel, also into the combustion zone (VZ), is designed as a housing which has at least one premixing zone (VMZ) for mixing fuel and oxygenous gas, and also having
- a first fuel line (4) for feeding fuel into the premixing zone (VMZ);
- a second line (6), arranged inside the housing (10), for transmitting the premixture from the at least one premixing zone (VMZ) into a final mixing zone (EMZ);
- a third feed means (5, 17; 2, 16), arranged at least partly inside the housing (10), for feeding residual fuel (RB) and oxygenous gas, so-called secondary air (SG), into the final mixing zone(EZ);
- a combustion zone (VZ) arranged downstream of the final mixing zone and having a transfer section (7) for conducting the ready prepared mixture out of the final mixing zone (EMZ) into the combustion zone (VZ), and also
- an additional passage (3) for feeding a third flow of oxygenous gas into the combustion zone (VZ), and
the housing (10) having a longitudinal axis (X-X) and the first fuel line (4) being provided with a nozzle plate (15) which is arranged essentially perpendicularly to the longitudinal axis.

9. Premixing burner according to Claim 8, the third feed means having a plurality of discharge nozzles (16; 17).

10. Premixing burner according to Claim 8, a burner according to the double-cone principle being used as final mixing zone, which burner essentially has two hollow, conical sectional bodies (111, 112) which are nested one inside the other in the direction of flow and whose respective centre axes (113, 114) are mutually offset, the adjacent walls of the two sectional bodies forming gaps (119), tangential in their longitudinal extent, for the premixture, and inflow openings (117) distributed in the longitudinal direction in the region of the tangential gaps in the walls of the two sectional bodies being provided for the residual fuel (RB) and for the secondary air (SG).

## Revendications

1. Procédé pour l'alimentation en combustible gazeux (B) d'un brûleur à prémélange, qui présente une conduite principale (10) pour l'introduction de gaz contenant de l'oxygène (G) dans au moins une zone de mélange (VMZ, EMZ) et, en fonction du pouvoir calorifique du combustible, également dans une zone de combustion (VZ), dans lequel au moins une première partie du combustible est fournie à la conduite principale (10), dans laquelle elle est mélangée avec une partie du gaz contenant de l'oxygène (G), le gaz primaire (PG), à l'intérieur d'au moins une zone de prémélange (VMZ) et forme un prémélange (VM),
dans lequel
- la concentration du combustible dans le prémélange (VM), dans les conditions respectives de fonctionnement du brûleur, est choisie de telle façon que le prémélange se situe hors de l'intervalle d'inflammabilité, et
- le prémélange (VM) est introduit dans une zone de mélange finale (EMZ), il est mélangé dans celle-ci avec le reste du combustible (RB) également introduit et avec un gaz secondaire contenant de l'oxygène (SG), et
- le mélange final résultant (EM) est introduit dans une zone de combustion (VZ) qui suit.

2. Procédé suivant la revendication 1, dans lequel un gaz tertiaire contenant de l'oxygène (TG) est introduit dans la zone de combustion (VZ).

3. Procédé suivant la revendication 1 ou 2, dans lequel il existe plusieurs zones de prémélange montées en série ou en parallèle.

4. Procédé suivant la revendication 1, 2 ou 3, dans lequel on utilise un combustible à faible pouvoir calorifique et la concentration du combustible dans le prémélange se situe au-dessus de la limite d'inflammabilité.

5. Procédé suivant la revendication 1, 2 ou 3, dans lequel on utilise un combustible à haut pouvoir calorifique et la concentration du combustible dans le prémélange se situe en dessous de la limite d'inflammabilité.

6. Procédé suivant la revendication 4, dans lequel la fraction massique du combustible dans le prémélange se situe entre environ 50 et 100 %.

7. Procédé suivant la revendication 5, dans lequel la fraction massique du combustible dans le prémélange se situe entre environ 0 et 2,2 %.

8. Brûleur à prémélange pour la mise en oeuvre du procédé suivant l'une quelconque des revendications précédentes, avec une conduite principale (10) qui, pour l'introduction de gaz contenant de l'oxygène dans au moins une zone de mélange (VMZ, EMZ) et, en fonction du pouvoir calorifique du combustible, également dans la zone de combustion (VZ), prend la forme d'une enceinte, qui présente au moins une zone de prémélange (VMZ) pour mélanger du combustible et du gaz contenant de l'oxygène,
ainsi qu'avec
- une première conduite de combustible (4) pour introduire du combustible dans la zone de prémélange (VMZ);
- une deuxième conduite (6), disposée à l'intérieur de l'enceinte (10), pour transférer le prémélange depuis la au moins une zone de prémélange (VMZ) jusque dans une zone de mélange finale (EMZ);
- un troisième moyen d'alimentation (5, 17; 2, 16), disposé au moins en partie à l'intérieur de l'enceinte (10), pour introduire le reste du combustible (RB) et le gaz contenant de l'oxygène, dit air secondaire (SG) dans la zone de mélange finale (EMZ);
- une zone de combustion (VZ) suivant la zone de mélange finale, avec une conduite de transfert (7) pour transférer le mélange complètement préparé depuis la zone de mélange finale (EMZ) jusque dans la zone de combustion (VZ), ainsi que
- un canal supplémentaire (3) pour introduire un troisième courant de gaz contenant de l'oxygène dans la zone de combustion (VZ), et
dans lequel l'enceinte (10) présente un axe longitudinal (X-X) et la première conduite de combustible (4) est pourvue d'un panneau d'injecteurs (15), qui est disposé sensiblement perpendiculairement à l'axe longitudinal.

9. Brûleur à prémélange suivant la revendication 8, dans lequel les troisièmes moyens d'alimentation présentent une pluralité d'injecteurs de sortie (16; 17).

10. Brûleur à prémélange suivant la revendication 8, dans lequel on utilise comme zone de mélange finale un brûleur basé sur le principe du double cône, avec essentiellement deux corps partiels coniques creux (111, 112), engagés l'un dans l'autre dans le sens de l'écoulement, dont les axes centraux respectifs (113, 114) sont décalés l'un par rapport à l'autre, dans lequel les parois voisines des deux corps partiels forment, suivant leur dimension longitudinale, des fentes tangentielles (119) pour le prémélange, et dans lequel il est prévu, dans la région des fentes tangentielles, des ouvertures d'entrée (117) réparties dans la direction longitudinale dans les parois des deux corps partiels, pour le reste du combustible (RB) et pour l'air secondaire (SG).
